# EUROPÄISCHE PATENTSCHRIFT

(11) **EP 2 818 649 B1**
(45) Veröffentlichungstag und Bekanntmachung des Hinweises auf die Patenterteilung: **06.09.2017**
(21) Anmeldenummer: 13173934.4
(22) Anmeldetag: 27.06.2013
(51) Int. Cl.: F01K 13/02, H02J 3/30, G05B 15/02, H02J 3/40, F01D 21/00

(54) **Kombinationskraftwerk**
Combination power plant
Centrale combinée

(43) Veröffentlichungstag der Anmeldung: 31.12.2014
(73) Patentinhaber: Enrichment Technology Company Ltd., 52409 Jülich (DE)
(72) Erfinder: vor dem Esche, Rainer, 52525 Heinsberg (DE); Treppmann, Christoph, 52074 Aachen (DE)
(74) Vertreter: Jostarndt Patentanwalts-AG

(56) Entgegenhaltungen:
- EP-A1- 2 595 266
- WO-A2-2005/029667
- FR-A1- 2 976 136
- N.N.: "ERGEG Final Report The lessons to be learned from the large disturbance in the European power system on the 4th of November 2006", , 6 February 2007 (2007-02-06), XP055362036, Retrieved from the Internet: URL:http://www.energy-regulators.eu/portal /page/portal/EER_HOME/EER_PUBLICATIONS/CEE R_PAPERS/Electricity/2007/E06-BAG-01-06_Bl ackout-FinalReport_2007-02-06.pdf [retrieved on 2017-04-05]
- André Richter ET AL: "Lastabwurfkonzept auf Basis von Jahresmittelwerten", Power and Energy Student Summit(PESS) 2015, January 13th-14th, 14 January 2015 (2015-01-14), XP055362051, Dortmund, Germany Retrieved from the Internet: URL:https://eldorado.tu-dortmund.de/bitstr eam/2003/33970/1/P01.8.pdf [retrieved on 2017-04-05]

## Beschreibung

### Gebiet der Erfindung

Die Erfindung bezieht sich auf ein Kombinationskraftwerk umfassend mindestens ein Turbinenkraftwerk und mindestens eine Energiespeicheranlage und auf ein entsprechendes Verfahren zum Betreiben eines solchen Kombinationskraftwerks.

### Hintergrund der Erfindung

Die Energie zum Betrieb eines Stromnetzes wird von diversen unterschiedlichen Kraftwerktypen geliefert, wie beispielsweise Atomkraftwerke, Kohlekraftwerke, Gaskraftwerke, Windenergie-, Biogasanlagen oder Solarkraftwerke, die Energie in ein nicht lokales Stromnetz einspeisen. Nicht lokale Stromnetze sind beispielsweise Übertragungsnetze, wie sie beispielsweise in Deutschland durch Amprion, 50Hertz, Tennet und TransnetEnBW betrieben werden. Diese Übertragungsnetze sind Teil des europäischen Verbundnetzes. In diesen Netzen wurde bisher zur Netzstabilisierung eine Netzfrequenz von 50 Hz verwendet. Im Zuge des Ausbaus der erneuerbaren Energien wird der Anteil der Turbinenkraftwerke (bezeichnet hier Kraftwerke mit Turbinen zur Energieerzeugung und deren Einspeisung) zunehmend reduziert. Damit werden entsprechend immer weniger Turbinen von Turbinenkraftwerken in das Netz einspeisen und entsprechend weniger Einfluss auf die Netzfrequenz ausüben. Wenn die Last im Netz steigt, werden die Turbinenwellen von Turbinenkraftwerken zur Abgabe von Energie abgebremst, so dass normalerweise die Netzfrequenz sinkt. Umgekehrt steigen die Drehzahlen der Turbinen und damit normalerweise auch die Netzfrequenz an, wenn die Last sinkt. Wenn nun aber bei der Stromerzeugung größtenteils, wie bei Windenergie-, Biogasanlagen oder Solarkraftwerke unter Verwendung erneuerbarer Energien, Netzwechselrichter den Strom bereitstellen, ist der Einfluss der Strommenge auf die Netzfrequenz nicht mehr gegeben, so dass die An- und Abschaltung der Turbinenkraftwerke nicht mehr aufgrund eines Absinkens bzw. einer Erhöhung der Netzfrequenz geregelt werden kann. In diesem Fall reagiert das Netz auf eine Änderung des Lastzustands nicht mehr mit einer Änderung der Netzfrequenz, sondern die Netzwechselrichter werden im Falle einer Überlastung schlagartig abschalten, was zu einem globalen Blackout (Stromausfall großer Stromnetze) führen könnte.

WO 2005/029667 A2 offenbart ein Verfahren zur Regulierung der Wechselstromfrequenz einer elektrischen Leistung, die in ein Wechselstromübertragungsnetz eingespeist wird. Dieses Verfahren schließt ein elektrisches Ankoppeln eines Energiespeicher-Subsystems mit ein oder mehreren Schwungradenergiespeichern an das Wechselstromübertragungsnetz ein. Zusätzlich werden entsprechende Geräte, Systeme und Apparate, die für die Implementierung des Verfahrens benötigt werden, offenbart.

FR 2 976 136 offenbart ein System mit einem Generator verbunden mit einer Turbine, um elektrische Energie für ein Inselnetz bereitzustellen. Eine Steuerung unterhält einen Schalter in einer geöffneten Stellung während einer Übergangsphase, in der die Steuerung eine Wärmequelle zur Erhöhung der verfügbaren elektrischen Leistung am Ausgang des Generators kontrolliert, wenn die Steuerung Leistung an das Inselnetz abgibt. Die Steuerung steuert ferner das Schließen des Schalters, um eine Versorgung mit Spannung gemäß einer Informationscharakteristik der verfügbaren elektrischen Leistung am Ausgang zu steuern. Ferner wird ein Verfahren zum Steuern eines sogenannten Clausius-Rankine-Kreisprozesses zum Erzeugen von Elektrizität in einem Inselnetz offenbart.

Es wäre daher wünschenswert, ein Stromnetz zur Verfügung zu haben, dass auch bei einem reduzierten Anteil an Turbinenkraftwerken hinreichend sicher gegen einen Stromausfall (Blackout) ist.

### Zusammenfassung der Erfindung

Es ist eine Aufgabe der vorliegenden Erfindung, ein geeignetes Kraftwerk und ein entsprechendes Verfahren zur Energieeinspeisung in ein nicht-lokales Stromnetz bereitzustellen, mit der die Sicherheit gegen einen plötzlichen Stromausfall im nicht-lokalen Stromnetz (Blackout) erhöht werden kann.

Diese Aufgabe wird gelöst durch ein Kombinationskraftwerk zur Einspeisung von Energie in ein nicht-lokales Stromnetz umfassend mindestens ein Turbinenkraftwerk und mindestens eine Energiespeicheranlage mit ein oder mehreren Energiespeichermodulen, wobei das Turbinenkraftwerk zur Einspeisung von Strom an das nicht-lokale Stromnetz angeschlossen ist und eine Überwachungseinheit umfasst, die eine Drehzahl der Turbine zumindest während der Energieeinspeisung in das nicht-lokale Stromnetz anhand einer drehzahlspezifischen Kenngröße überwacht, wobei die Energiespeicheranlage separat oder über das Turbinenkraftwerk an das nicht-lokale Stromnetz angeschlossen ist, wobei die Überwachungseinheit mit einer Steuereinheit der jeweiligen Energiespeicheranlage zur Übermittlung eines Kenngrößensignals basierend auf der drehzahlspezifischen Kenngröße an die Steuereinheit über eine Datenverbindung verbunden ist und die Steuereinheit der Energiespeicheranlage dazu vorgesehen ist, die Energiespeicheranlage auf Basis des Kenngrößensignals zu veranlassen, zusätzliche Energie in das nicht-lokale Stromnetz einzuspeisen, sofern die Drehzahl der Turbinen absinkt, wobei das Kombinationskraftwerk zusätzlich die weiteren Merkmale des anhängenden unabhängigen Anspruchs 1 umfasst.

Durch die Ergänzung des Turbinenkraftwerks mit einem Energiespeichersystem, das zudem so an das Turbinenkraftwerk angeschlossen ist, und dass der Energiespeicher Energie an das nicht-lokale Stromnetz abgibt, wenn die Drehzahl der Turbine sinkt, so wird die Drehzahlabnahme der Turbine aufgrund einer externen Last im nicht-lokalen Stromnetz langsamer reduziert, als ohne zugeschaltete Energiespeicheranlage. Je nach Menge der zusätzlich eingespeisten Energie kann die Turbinendrehzahl auch wieder auf den Sollwert angehoben werden. Damit wird die Gesamtträgheit des Kombinationskraftwerks als Gesamtsystem erhöht und verhält sich damit nach extern so, als wäre die drehende Masse (Turbine) vergrößert worden. Damit kann ohne tatsächliche zusätzliche Masse die stabilisierende Wirkung der verbleibenden Turbinen erhöht werden, ohne dafür den Regelparameter einer Netzfrequenz verwenden zu müssen. Somit ist dieses Kombinationskraftwerk mit der gleichen stabilisierenden Wirkung auch bei fehlender Frequenzregelung des Turbinenkraftwerks aufgrund der Netzfrequenz des nicht-lokalen Stromnetzes einsetzbar und erhöht daher die Sicherheit gegen sogenannte Blackouts in nicht-lokalen Stromnetzen mit einem hohen Anteil an Kraftwerken auf Basis regenerativer Energiequellen, die ihre Energie über Netzwechselrichter mit konstanter Netzfrequenz in das nicht-lokalen Stromnetz einspeisen und daher die früher übliche Regelung der Turbinenkraftwerke anhand der Schwankung der Netzfrequenz unmöglich machen oder zumindest so stark erschweren würden, dass ohne die Verwendung der erfindungsgemäßen Lösung das Risiko eines Blackouts steigen würde. Durch die erfindungsgemäßen Kombinationskraftwerke kann außerdem für Kraftwerke mit Netzwechselrichtern auf eine Nachrüstung mit sogenannten virtuellen Synchronmaschinen verzichtet werden. Ohne das erfindungsgemäße Kombinationskraftwerk müssten die Kraftwerke mit Netzwechselrichtern, insbesondere die Kraftwerke, die auf Basis regenerativer Energien wie Windkraftanlagen oder Solaranlagen Energie erzeugen, mit solchen virtuellen Synchronmaschinen ausgerüstet werden, damit sich diese Kraftwerke verträglich in das Netz integrieren lassen, um weiterhin eine globale Steuerung der Gesamtheit der Turbinenkraftwerke aufgrund der in Netz bestimmten Netzfrequenz zu ermöglichen. Somit führt das erfindungsgemäße Kombinationskraftwerk auch zu einem günstigeren Einsatz von Kraftwerken, die ohne sogenannte virtuelle Synchronmaschinen über Netzwechselrichter an das nicht-lokale Stromnetz angeschlossen sind. Außerdem benötigen an das nicht lokale Stromnetz angeschlossene Energiespeicher ebenfalls keine virtuellen Synchronmaschinen für den Netzanschluss.

Mit der vorliegenden Erfindung kann daher die Versorgungssicherheit und Netzqualität in einem nicht lokalen Stromnetz oder Netzverbund gewährleistet werden. Gerade die Möglichkeit positiver und negativer Energiebereitstellung (Energieeinspeisung und Aufnahme von Energie aus dem Stromnetz) ermöglicht eine flexible Reaktion auf die vorliegenden Stromnetzzustände, die indirekt über die Drehzahl der Turbinen des Turbinenkraftwerks bestimmt wird. Durch die Energiespeicheranlage(n) können effizient die Bedürfnisse in nicht lokalen Stromnetzen durch die Interaktion zwischen Turbinenkraftwerk und Energiespeicheranlage erfüllt werden. Mit dem erfindungsgemäßen Energiespeichersystem kann auch die Steigerung der technischen und wirtschaftlichen Nutzbarkeit regenerativer Energiequellen erreicht werden und die Regelung im nicht lokalen Stromnetz vereinfacht werden.

Hierbei bezeichnet das nicht-lokale Stromnetz ein Stromnetz (im Folgenden auch lediglich als Netz bezeichnet), das sich überregional über sehr große Gebiete erstreckt. Nicht lokale Stromnetze sind beispielsweise Übertragungsnetze (öffentliches Stromnetz). Das öffentliche Stromnetz in Deutschland setzt sich beispielsweise aus vier Übertragungsnetzen zusammen, die von den Netzbetreibern Amprion, 50Hertz, Tennet und TransnetzEnBW betrieben werden. Diese vier Übertragungsnetze bilden zusammen den Netzregelverbund für Deutschland. In anderen Ländern werden entsprechende Übertragungsnetze durch andere Netzbetreiber betrieben. Das übergeordnete europäische Verbundnetz aus den jeweiligen Übertragungsnetzen in den einzelnen Staaten ist ebenfalls als nicht lokales Stromnetz anzusehen, wofür allerdings derzeit nur die Standards für die Regelenergie festgelegt sind.

Der Ausdruck "Turbinenkraftwerk" bezeichnet Kraftwerke mit Turbinen. Solche Kraftwerke sind beispielsweise dafür geeignet, Regelleistung (auch als Reserveleistung oder Regelenergie bezeichnet) zur Versorgung der Stromkunden mit genau der benötigten elektrischen Leistung in ein Stromnetz einzuspeisen. Dazu können kurzfristig Leistungsanpassungen bei Turbinenkraftwerken durchgeführt werden, indem schnell anlaufende Kraftwerke (z. B. Gasturbinenkraftwerke) gestartet oder Pumpspeicherkraftwerke eingesetzt werden. Regelleistung ist ein Teil der Ausgleichsleistungen, die im Rahmen der Bereitstellung von Energie zur Deckung von Verlusten und für den Ausgleich von Differenzen zwischen Ein- und Ausspeisung benötigt wird. Die regelbaren Kraftwerke dienen dazu, primäre und sekundäre Regelleistung im nicht-lokalen Stromnetz bereitzustellen Die primäre Regelleistung dient dazu, Ungleichgewichte zwischen physikalischem Leistungsangebot und Leistungsnachfrage mit Ziel der Wiederherstellung einer stabilen Netzfrequenz auszugleichen. Die sekundäre Regelleistung soll das Gleichgewicht zwischen physikalischem Stromangebot und Stromnachfrage nach dem Auftreten einer Differenz wieder herstellen, wobei im Gegensatz zur Primärregelung nur die Situation in der jeweiligen Regelzone inklusive des Stromaustausches mit anderen Regelzonen betrachtet wird. Turbinenkraftwerke im Sinne der vorliegenden Erfindung sind beispielsweise Kohlekraftwerke, Gasturbinenkraftwerke, Atomkraftwerke oder Pumpspeicherkraftwerke. Alle diese Kraftwerke sind über Turbinen an das Stromnetz angeschlossen.

Der Ausdruck "Turbine" bezeichnet hier eine stromerzeugende Strömungsmaschine, die die innere Energie eines strömenden Mediums (Flüssigkeit oder Gas) in Rotationsenergie und letztlich über einen Generator in elektrische Energie umwandelt. Während in großen konventionellen Kraftwerken (beispielsweise Kohle- oder Gaskraftwerke) üblicherweise Heißdampfturbinen mit Drehzahlen von 3000 bzw. 3600 Umdrehungen pro Minute zum Einsatz kommen, werden in Kernkraftwerken meist Sattdampfturbinen mit Drehzahlen von 1500 bzw. 1800 Umdrehungen pro Minute betrieben. Hier werden auch die höchsten Kraftwerksleistungen, häufig über 1000 MW, erreicht. Die Turbinenkraftwerke (mit ein oder mehreren separaten Kraftwerksblöcken) können dabei eine oder mehrere separate Turbinen zur Stromerzeugung und Einspeisung in das nicht-lokale Stromnetz umfassen. Wenn die Last im Netz steigt, werden die Turbinenwellen der Turbinen von regelfähigen Kraftwerken zur Abgabe von Energie abgebremst (Turbinendrehzahl sinkt). Umgekehrt steigen die Drehzahlen der Turbinen, wenn die Last sinkt.

Der Ausdruck "Überwachungseinheit" bezeichnet jede Einheit, die in der Lage ist, die Drehzahl der Turbine anhand einer drehzahlspezifischen Kenngröße zu überwachen. Als drehzahlspezifische Kenngröße wird die physikalische Größe bezeichnet, die entweder die Drehzahl direkt angibt oder aus der sich die Drehzahl indirekt bestimmen lässt. Solche drehzahlspezifischen Kenngrößen sind beispielsweise die Turbinendrehzahl selber, die Turbinenfrequenz oder die Netzfrequenz am Ausgang der Turbine. Durch die Korrelation zwischen Drehzahl und drehzahlspezifischer Kenngröße repräsentiert die Veränderung der drehzahlspezifischen Kenngröße je nach gewählter Kenngröße ein Absinken oder ein Ansteigen der Drehzahl. Der Fachmann kann im Rahmen der vorliegenden Erfindung auch andere geeignete drehzahlspezifische Kenngrößen wählen. Die Überwachungseinheit kann dabei beispielsweise eine Vorrichtung sein, die Messeinheiten zur Bestimmung der drehzahlspezifischen Kenngröße und einen Prozessor und gegebenenfalls weitere Komponenten zur Auswertung, Aufzeichnung und Übermittlung der drehzahlspezifischen Kenngröße umfasst. In einer anderen Ausführungsform kann die Überwachungseinheit auch an ein oder mehrere solcher Messeinheiten angeschlossen sein. Der Prozessor kann beispielsweise aus der drehzahlspezifischen Kenngröße eine Drehzahl berechnen, indem ein entsprechender Algorithmus auf dem Prozessor ausgeführt wird. Diese Drehzahl kann auf dem Prozessor mit einer Solldrehzahl verglichen werden und damit ein Steigen oder ein Absinken der Turbinendrehzahl festgestellt werden. Alternativ kann die drehzahlspezifische Kenngröße mit einem Sollwert verglichen werden, der die Solldrehzahl repräsentiert. Über das Abweichen der drehzahlspezifischen Kenngröße von einem Sollwert wird dann das Steigen oder ein Absinken der Turbinendrehzahl festgestellt.

Ein Absinken der Drehzahl der Turbine (beispielsweise unter einen ersten Schwellwert) impliziert eine hohe Last im angeschlossenen Stromnetz, die durch die in dem Moment in das nicht-lokale Stromnetz einspeisenden Kraftwerke (Turbinenkraftwerke und alle weiteren Kraftwerke wie Windenergieanlagen und Solarkraftwerke) nur schwer oder nicht gedeckt werden kann. Das Fortbestehen dieses Ungleichgewichts könnte zu einem globalen Netzausfall (Blackout) führen. Die Netzfrequenz selber wäre bei einem hohen Anteil an Kraftwerken, die über einen Netzwechselrichter ihre Energie in das nicht-lokale Stromnetz einspeisen (beispielsweise Windenergieanlagen oder Solarkraftwerke), nicht hinreichend genau aufgrund der Maskierung dieses Parameters durch die mit konstanter Frequenz einspeisenden Netzwechselrichter messbar, so dass den Turbinenkraftwerken der Steuerparameter für die Regelleistung fehlt. Die Überwachung der drehzahlspezifischen Kenngröße für die Turbinendrehzahl dient in der vorliegenden Erfindung als Regelparameter für das Turbinenkraftwerk, der die Regelung auf die allgemeine Netzfrequenz im nicht-lokalem Stromnetz ersetzt. Da diese Turbinenkraftwerke allerdings nicht beliebig schnell auf Parameteränderungen reagieren können, dient die Energiespeicheranlage, die aufgrund der übermittelten Turbinendrehzahl gesteuert wird, als schnell regelbare Leistungsreserve zur Überbrückung von Leistungsspitzen, ohne dass Netzparameter im nicht-lokalen Stromnetz gemessen werden müssen. Das von der Überwachungseinheit übermittelte Kenngrößensignal kann dabei die drehzahlspezifische Kenngröße selber oder ein auf der drehzahlspezifischen Kenngröße oder ausgewerteten drehzahlspezifischen Kenngröße basierendes Steuersignal zur Abgabe oder Aufnahme von Energie von der oder durch die Energiespeicheranlage umfassen. Sofern das Kenngrößensignal nicht selbst die Anweisung an die Energiespeicheranlage zur Einspeisung oder Abgabe von Energie umfasst, so muss die Energiespeicheranlage selbst aus dem Kenngrößensignal ein Absinken oder Ansteigen der Turbinendrehzahl ableiten. Besteht das Kenngrößensignal beispielsweise lediglich aus der drehzahlspezifischen Kenngröße, so ist in einer Ausführungsform die Energiespeicheranlage dazu geeignet, aus der drehzahlspezifischen Kenngröße eine Drehzahl zu berechnen, indem ein entsprechender Algorithmus beispielsweise in der Steuereinheit der Energiespeicheranlage ausgeführt wird. Diese Drehzahl kann dabei mit einer Solldrehzahl verglichen werden und damit ein Steigen oder ein Absinken der Turbinendrehzahl festgestellt werden. Alternativ kann die drehzahlspezifische Kenngröße mit einem Sollwert verglichen werden, der die Solldrehzahl repräsentiert. Über das Abweichen der drehzahlspezifischen Kenngröße von einem Sollwert wird dann das Steigen oder ein Absinken der Turbinendrehzahl festgestellt. Die Überwachungseinheit übermittelt das Kenngrößensignal an die Steuereinheit über eine geeignete Datenleitung. Diese Datenleitung kann dabei mittels Datenkabeln oder drahtlos realisiert sein.

Die erfindungsgemäße Energiespeicheranlage kann dabei jede geeignete Energiespeicheranlage sein, die aufgrund ihrer Speichereigenschaften und Speicherparameter in der Lage ist, für nicht-lokale Netze primäre oder sekundäre Regelleistung bereitzustellen. Die vorliegende Erfindung setzt Energiespeicheranlagen voraus, die eine sehr schnelle Energieabgabe oder sehr schnell Energieaufnahme von einer Energiemenge ermöglichen. Geeignete Energiespeicheranlagen sind daher beispielsweise Druckluftspeicher oder Wasserstoffspeicher in Kombination mit Brennstoffzellen, Batteriesysteme oder kinematische Energiespeicher wie beispielsweise Schwungradenergiespeicher.

Hierbei kann die Energiespeicheranlage entweder direkt mit dem nicht-lokalen Stromnetz oder über ein angeschlossenes lokales Stromnetz wie die Verbindung mit dem Turbinenkraftwerk und darüber indirekt mit einem nicht-lokalen Stromnetz verbunden sein. Die Energiespeicheranlage stellt somit eine lokale Leistungsreserve für sich eventuell hinzuschaltende größere Stromabnehmer oder Einschaltstromspitzen und eine Speicherreservoir zum Speichern von lokalen Energieüberschussmengen dar, ohne dass die Energiespeicheranlage zur netzstützenden Steuerung mit einer globalen externen Netzsteuerung oder Netzagentur verbunden werden muss. Die von der Energiespeicheranlage zusätzlich zur Verfügung gestellte Regelleistung (auch Reserveleistung) gewährleistet die Versorgung von Stromkunden mit genau der benötigten elektrischen Leistung bei unvorhergesehenen Ereignissen im Stromnetz, die sich in einem Absinken oder Ansteigen der Turbinendrehzahl im Turbinenkraftwerk bemerkbar machen. Dazu können kurzfristig Leistungsanpassungen bei Turbinenkraftwerken durch einen kurzzeitig schwankenden Energiebedarf durchgeführt werden und die Startzeit oder Leistungsanpassungszeit für anlaufende / hochzufahrende Kraftwerke oder Energiespeicher überbrückt werden. In einer Ausführungsform ist die Energiespeicheranlage mit dem Turbinenkraftwerk elektrisch so verbunden, dass die Energiespeicheranlage zusätzlich eine Schwarzstartunterstützung für das Turbinenkraftwerk bereitstellt. Als Schwarzstart wird allgemein das Anfahren eines Energielieferanten nach einem Netzausfall bezeichnet, wenn dies unabhängig vom Stromnetz geschieht. Unter Schwarzstartfähigkeit versteht man die Fähigkeit eines solchen Energielieferanten, unabhängig vom Stromnetz vom abgeschalteten Zustand ausgehend, hochzufahren beziehungsweise Energie aus einem Energiespeicher abzugeben. Dies ist insbesondere bei einem trotz vorhandenen Kombinationskraftwerken aufgetretenen flächendeckenden Ausfall des nicht lokalen Stromnetzes von Bedeutung, um das nicht lokale Stromnetz wieder in Betrieb zu nehmen. Die Energie schwarzstartfähiger Kraftwerke oder Energiespeicheranlagen kann dann zum Anfahren nicht-schwarzstartfähiger Kraftwerke oder Energiespeicheranlagen verwendet werden. Beispielsweise benötigen Wärmekraftwerke ein hohes Maß an elektrischer Energie, bevor sie selber elektrische oder thermische Leistung bereitstellen können. Stellt man einem Kohle- oder Kernkraftwerksblock eine oder mehrere erfindungsgemäße schwarzstartfähige lokale Energiespeicheranlagen im Rahmen des erfindungsgemäßen Energiespeichersystems mit ausreichender Leistung zur Seite, so kann für das Gesamtsystem auch hier eine Schwarzstartfähigkeit erreicht werden. Damit senkt das Kombinationskraftwerk nicht nur das Risiko eines sogenannten "Blackouts" in nicht-lokalen Stromnetzen mit einem hohen Anteil an einspeisenden Wind- oder Solarkraftwerken, sondern erleichtert auch das Wiederanfahren der Turbinenkraftwerke nach einem dennoch eingetretenen Netzausfall.

Die Steuerung der Energiespeicheranlage durch die Steuereinheit geschieht auf Basis des Kenngrößensignals, das sich aus dem zeitlichen Verhalten der drehzahlspezifischen Kenngröße ergibt. Die Steuereinheit bezeichnet hierbei eine Komponente in der Energiespeicheranlage, die die Energiespeicheranlage steuert, d.h., die die gewünschten Betriebszustände und Betriebsparameter einstellt und die die Energiespeicheranlage entsprechend eines Betriebsplans, der die gewünschten Betriebszustände als Funktion des Kenngrößensignals enthält, steuert. Besteht das Kenngrößensignal beispielsweise lediglich aus der drehzahlspezifischen Kenngröße, so kann die Steuereinheit in einer Ausführungsform aus der drehzahlspezifischen Kenngröße eine Drehzahl berechnen, indem ein dafür geeigneter entsprechender Algorithmus in der Steuereinheit ausgeführt wird.

In einer Ausführungsform ist die Steuereinheit ferner dazu vorgesehen, die Energiespeicheranlage aufgrund eines entsprechenden Kenngrößensignals dazu zu veranlassen, Energie aus dem nicht-lokalen Stromnetz oder einen Teil der durch das Turbinenkraftwerk für das nicht-lokale Stromnetz bereitgestellten Energie aufzunehmen und zu speichern, sofern die Drehzahl der Turbine steigt. Somit kann bei niedriger Last ein möglicherweise zu hohes Energieüberangebot aus dem nicht-lokalen Stromnetz im Rahmen der Kapazität der Energiespeicheranlage aufgenommen werden und in späteren Phasen eines hohen Energiebedarfs aufgrund eines entsprechenden Kenngrößensignals wieder zurück ins Netz eingespeist werden, entweder direkt oder indirekt über den Anschluss des Turbinenkraftwerks an das nicht-lokale Stromnetz. Somit verringert der erfindungsgemäße Betrieb der Energiespeicheranlage das Risiko eines Netzausfalls auch bei einem zu hohen Energieangebot im Netz. In einer Ausführungsform erfolgt das Einspeisen an zusätzlicher Energie erst, wenn die Drehzahl der Turbine unter einen ersten Schwellwert absinkt und/oder das Aufnehmen und Speichern von Energie erfolgt erst, wenn die Drehzahl der Turbine über einen zweiten Schwellwert steigt. Damit braucht die Energiespeicheranlage nicht auf jede geringe Schwankung der Turbinendrehzahl reagieren, was eventuelle nicht vollständig lastwechselfeste Komponenten in der Energiespeicheranlage schont und somit auch die störungsfreie Verfügbarkeit der Energiespeicheranlage erhöht. Gerade eine dauerhaft verfügbare Energiespeicheranlage kann die Sicherheit gegen einen plötzlichen Stromausfall im nicht-lokalen Stromnetz (Blackout) wirkungsvoll erhöhen.

In einer Ausführungsform steuert die Steuereinheit die Menge der eingespeisten zusätzlichen Energie und/oder die Menge der aufgenommenen Energie als Funktion der Abweichung der Drehzahl der Turbine von einer Solldrehzahl variabel. Somit kann das Kombinationskraftwerk besonders schnell und bedarfsgerecht auf sich verändernde Lasten im nicht-lokalen Stromnetz reagieren.

In einer Ausführungsform ist die Energiespeicheranlage modular aufgebaut, so dass bei Bedarf zusätzliche Energiespeichermodule zur Energiespeicheranlage hinzugefügt oder aus dieser herausgenommen werden können. Der modulare Aufbau ermöglicht es gerade, dass die Energiespeicheranlage an den tatsächlichen Regelbedarf kontinuierlich und flexibel angepasst werden kann. Mit der modularen Bauweise der Energiespeicheranlage kann die Energiemenge, die von der Energiespeicheranlage pro Zeiteinheit gespeichert und abgegeben werden kann, an die Energiemenge angepasst werden, die durch das Turbinenkraftwerk zur Verfügung gestellt wird, so dass die Energiekapazität der Energiespeicheranlage bei unterschiedlich großen Turbinenkraftwerken immer eine entsprechend angepasste Größe besitzen kann, die ausreichend im Vergleich zum Turbinenkraftwerk ist. Die auf diese Weise angepasste Energiespeicheranlage kann einerseits einen wirksamen Stützbetrieb des nicht-lokalen Stromnetzes durchführen und ist besonders gut geeignet, für das jeweilige Turbinenkraftwerk dessen Anfahr-, Hochfahr- oder Herunterfahrzeit bei einer benötigten Leistungsanpassung zu überbrücken. Dazu muss die Energiespeicheranlage eben in der Lage sein, über einen Zeitraum im Minutenbereich die Energiemenge zu liefern beziehungsweise aufzunehmen, die dieses spezifische Turbinenkraftwerk standardmäßig liefern kann. Um diese Funktionen wirkungsvoll durchführen zu können, muss die Energiespeicheranlage nicht notwendigerweise eine enge räumliche Nähe zum jeweiligen Turbinenkraftwerk besitzen, sondern muss mit diesem lediglich zur Übermittlung des Kenngrößensignals verbunden sein.

In einer Ausführungsform sind die Energiespeichermodule der Energiespeicheranlage innerhalb der Energiespeicheranlage an ein internes Stromnetz der Energiespeicheranlage angeschlossen, und das interne Stromnetz ist über eine entsprechende Regeleinheit mit dem nicht-lokalen Stromnetz oder dem Turbinenkraftwerk verbunden. Das interne Stromnetz ermöglicht eine einfache Integration von zusätzlichen Energiespeichermodulen bei Bedarf unabhängig von den Anschlüssen an das nicht-lokale Stromnetz und/oder an das Turbinenkraftwerk. In einer bevorzugten Ausführungsform besitzt dazu jedes Energiespeichermodul einen eigenen Aufschaltpunkt zu dem internen Stromnetz.

Die Regeleinheit ist dazu ausgestaltet, einen Energiefluss zwischen den angeschlossenen Stromnetzen (nicht-lokales Stromnetz und/oder Verbindung zum Turbinenkraftwerk) und der Energiespeicheranlage zu regeln. Wären die angeschlossenen Stromnetze lediglich mit einem Aufschaltpunkt der Energiespeicheranlage verbunden, so würde die von der lokalen Energiespeicheranlage eingespeiste Energie nur in das Stromnetz eingespeist werden, das den größeren Energiebedarf hat. Hiermit könnte aber nicht mehr gezielt gemäß einer Aufgabenverteilung geregelt werden. Gegenwärtige Energiespeicher sind typischerweise über einen Schalter mit einem einzigen Stromnetz verbunden. Hier würde die Steuerung des Energieflusses entfallen und der Schalter würde lediglich bei einem Netzausfall geöffnet werden. In der vorliegenden Erfindung ist die Regeleinheit dagegen derart ausgestattet, dass nach Abtrennen des nicht-lokalen Stromnetzes das Turbinenkraftwerk weiterhin mit Energie versorgt werden kann oder aus diesem Energie aufgenommen werden kann. Somit kann bei einem Netzausfall das Turbinenkraftwerk zwar vom Netz getrennt, aber für eine Übergangszeit die Energiespeicheranlage mit Energie versorgen, bis diese vollständig geladen ist. Erst danach müsste das Turbinenkraftwerk abgeschaltet werden. Die vollgeladene Energiespeicheranlage könnte dann auch mit ihrer vollen Kapazität für eine eventuelle Schwarzstartunterstützung des Turbinenkraftwerks zur Verfügung stehen. Die Regeleinheit steuert den Energiefluss in der von der Steuerung der Energiespeicheranlage vorgesehenen Weise. In einer bevorzugten Ausführungsform ist die Regeleinheit außerdem dazu vorgesehen, ein oder mehrere der angeschlossenen Stromnetze im Bedarfsfall von der lokalen Energiespeicheranlage zu trennen. Sollte eines der angeschlossenen Stromnetze ausfallen, so trennt die Regeleinheit dieses Stromnetz unter Umständen sofort innerhalb weniger Millisekunden von der Energiespeicheranlage, damit diese weiterhin für die anderen Stromnetze betriebsbereit bleibt. Ansonsten würde ggf. ein Kurzschluss oder eine Überlastsituation eintreten.

In einer Ausführungsform umfasst bei mehreren Energiespeichermodulen in der Energiespeicheranlage jedes Energiespeichermodul eine Modulsteuereinheit zur Steuerung einer Abgabe oder Aufnahme von Energie an oder aus dem internen Stromnetz und die Steuereinheit der Energiespeicheranlage ist als Mastersteuereinheit für die Modulsteuereinheiten ausgebildet. Hierbei regeln die Modulsteuereinheiten die Betriebsparameter der einzelnen Speichereinheiten in den Energiespeichermodulen, wobei die einzustellenden Betriebsparameter von der Mastersteuereinheit entweder direkt vorgegeben werden oder eine Vorgabe einer aufzunehmenden oder abzugebenden Energiemenge aus dem jeweiligen Energiespeichermodul durch die Modulsteuereinheiten in entsprechend einzustellende Betriebsparameter für die einzelnen Speichereinheiten umgerechnet wird. Durch die über das Mastersteuermodul abgewickelte Kommunikation mit der Überwachungseinheit des Turbinenkraftwerks können die einzelnen Energiespeichermodule baugleich und ohne technische Anpassung bei Bedarf in das interne Stromnetz der Energiespeicheranlage zur Kapazitätserweiterung eingeführt werden und sind danach ohne weitere Steuermaßnahmen sofort betriebsbereit. Hierbei kann ein Energiespeichermodul beispielsweise eine Kapazität von 1,6 MWh bereitstellen. Für einen Energiespeicheranlage mit beispielsweise 20 Energiespeichermodulen ä 1,6 MWh ergibt sich eine Gesamtkapazität der Energiespeicheranlage von 32 MWh. Die Gesamtkapazität kann durch die geeignete Wahl der Anzahl und Größe der Module für das jeweilige Turbinenkraftwerk geeignet gewählt werden.

In einer weiteren Ausführungsform ist das Energiespeichermodul als mechanisches Energiespeichermodul mit ein oder mehreren Schwungradenergiespeichereinheiten ausgebildet. Schwungradenergiespeicher besitzen den Vorzug, dass sie die aufzunehmenden oder abzugebenden Mengen an Energie äußerst variabel und präzise für die Abnehmer bereitstellen können und diese Energie in Form von mechanischer Energie speichern. Dadurch kann die Energiespeicheranlage über das Kenngrößensignal besonders präzise auf die Turbinendrehzahl geregelt werden, was letztendlich zu einer größtmöglichen Netzstabilisierung und damit einer bestmöglichen Black-out-Prävention führt. Schwungradenergiespeicher sind außerdem lastwechselfest und somit hervorragend geeignet (im Gegensatz zu beispielsweise Batteriespeicher), auch kleine Lastschwankungen durch kurzzeitige Einspeisungen oder Aufnahmen von Energie ins /aus dem nicht lokalen Stromnetz auszugleichen beziehungsweise zu glätten. Außerdem stellen Schwungradenergiespeicher ein wesentlich kleineres Gefahrenpotential im Brandfall dar, als beispielsweise eine größere Ansammlung an Batterien, zusammengeschaltet als Batterie-Energiespeicheranlage oder Wasserstoffspeicheranlagen mit Wasserstofftanks mit dem brennbaren Wasserstoff als Gefahrenpotential. In Druckluftspeicheranlagen können dagegen zwar nicht-brennbare Gase zur Energiespeicherung verwendet werden, dennoch besitzen die Drucklufttanks ein Explosionspotential aufgrund des hohen Drucks in den Drucklufttanks. Somit stellen Schwungradenergiespeicher als Energiespeicheranlagen eine umweltsicherere Technologie für die Energiebereitstellung im Vergleich zu anderen Speichertechnologien dar und sind für beliebig viele Lastzyklen pro Zeiteinheit gut geeignet.

Bei der Energiebereitstellung wird von negativer Energiebereitstellung gesprochen, wenn Energie aus dem Stromnetz aufgenommen und im Schwungradenergiespeicher in Form von mechanischer Rotationsenergie gespeichert wird. Entsprechend wird von positiver Energiebereitstellung gesprochen, wenn die im Schwungradenergiespeicher in Form von mechanischer Rotationsenergie gespeicherte Energie mittels Abbremsen der Schwungräder (oder Rotoren) in das Stromnetz eingespeist wird. Hierbei ist die Fähigkeit von Schwungradspeichern Energie innerhalb von wenigen Millisekunden zur Verfügung stellen zu können ebenso vorteilhaft, wie die Fähigkeit, die spezifizierte Leistung über einen Zeitraum von mehreren Minuten zu liefern. Der Anschluss der Energiespeicheranlage an das nicht-lokale Stromnetz und/oder an das Turbinenkraftwerk kann vom Fachmann geeignet ausgestaltet werden.

In einer weiteren Ausführungsform können die Steuereinheiten mehrerer Energiespeicheranlagen von unterschiedlichen Kombinationskraftwerken außerdem über ein Kommunikationsnetz, gegebenenfalls mit einer zentralen Steuereinheit zum Betrieb der Mehrzahl der Energiespeicheranlagen als Energiespeichersystems, verbunden sein. In einem solchen System aus mehreren Kombinationskraftwerken oder mehreren Energiespeicheranlagen eines Kombinationskraftwerkes wäre es möglich, wenn die Steuerung der einzelnen Energiespeicheranlagen aufgrund der Kenngrößensignale der jeweiligen Turbinenkraftwerke durch eine globale Bedarfssteuerung durch die zentrale Steuereinheit außerhalb des Rahmens der vorliegenden Erfindung zu ersetzen oder bei freien Kapazitäten der einzelnen Energiespeicheranlage zu ergänzen. Die Steuerung der jeweiligen Energiespeicheranlage würde in einem solchen Energiespeichersystem nicht entsprechend der Kenngrößensignale des angeschlossenen Turbinenkraftwerks gesteuert, sondern die zentrale Steuereinheit würde die Kenngrößensignale aller beteiligten Kombinationskraftwerke kontrollieren und entsprechend den jeweiligen lokalen Steuereinheiten globale Steueranweisungen übermitteln, die die Stelle der Kenngrößensignale einnehmen. Für die Ausführung der globalen Steueranweisungen im Energiespeichersystem muss die Energiespeicheranlage nicht einmal direkt mit dem nicht-lokalen Stromnetz verbunden sein. Es reicht dafür aus, dass die Energiespeicheranlage indirekt über das Turbinenkraftwerk mit dem nicht lokalen Stromnetz verbunden ist. Die von der zentralen Steuereinheit an die verschiedenen Energiespeicheranlagen übermittelten globalen Steueranweisungen können dabei die Aufgaben des Energiespeichersystems in Gänze oder speziell für regionale Zwecke berücksichtigen. So kann beispielsweise aufgrund geänderter äußerer Einflüsse auf Energiespeichersystemebene ein Bedarf entstehen, die lokale Leistungsreserve oder die Speicherung von lokalen Energieüberschussmengen von ein oder mehreren Energiespeicheranlagen anzupassen. Die zentrale Steuereinheit würde entsprechend für diese Energiespeicheranlagen neue globale Steueranweisungen erstellen und übermitteln, die dann von den jeweiligen Steuereinheiten vor Ort für die einzelnen Energiespeicheranlagen durchgeführt werden. Beispielsweise muss aufgrund einer erwarteten höheren Windstärke eine größere Menge an Windenergie aus einer Windenergieanlage zwischengespeichert werden. Die betreffenden Energiespeicheranlagen in der Nähe der Windenergieanlage haben keine genügenden Speicherkapazitäten dafür frei, da die dort lokalisierten Energiespeicheranlagen bereits zu voll geladen sind. In diesem Fall steuert die zentrale Steuereinheit einen Energietransfers zu anderen, nicht voll geladenen Energiespeicheranlagen, um vor Ort ausreichend Speicherkapazität bereit zu stellen, um die erwartete Windenergiemenge mit den lokalen Energiespeicheranlagen vor Ort speichern zu können.

Dazu müssen die zentrale Steuereinheit und die jeweiligen lokalen Steuereinheiten über ein Kommunikationsnetzwerk verbunden sein. Das Kommunikationsnetz kann vom Fachmann im Rahmen der vorliegenden Erfindung geeignet ausgestaltet werden. Beispielsweise ist das Kommunikationsnetz ein funkbasiertes Netz oder Mobilfunknetz, eine Hochverfügbarkeitsverbindung oder ein Netz nach IECG. Alternativ könnte das Kommunikationsnetz auch als ein kabelgebundenes Telefonnetz oder über ein Computernetz (beispielsweise das Internet) ausgestaltet sein. In einer Ausführungsform umfasst das Kommunikationsnetzwerk mehrere unterschiedliche Arten von Netzwerken (Sub-Kommunikationsnetze) und entsprechende Schnittstellen zu der zentralen Steuereinheit und der oder den lokalen Energiespeicheranlagen und/oder der oder den lokalen Steuereinheiten. Durch das Vorhandensein mehrerer Sub-Kommunikationsnetze im Kommunikationsnetzwerk wird die Ausfallgefahr des gesamten Kommunikationsnetzwerks deutlich verringert, da bei Ausfall einer Netzwerkart alternative Netzwerkarten für die ungestörte Kommunikation zwischen zentraler Steuereinheit und den lokalen Steuereinheiten zur Verfügung stehen. Vorzugsweise umfasst das Kommunikationsnetzwerk kabel-, funk- und stromgebundene Sub-Kommunikationsnetze.

In einer weiteren Ausführungsform sind die Steuereinheiten der einzelnen Energiespeicheranlagen dazu ausgestaltet, eine bestehende Verbindung zur zentralen Steuereinheit über das Kommunikationsnetz periodisch zu prüfen. In einem sogenannten digitalen Handschlag wird das Bestehen der Kommunikationsverbindung geprüft. Hierzu sendet die Steuereinheit ein Datenpaket zu der zentralen Steuereinheit aus und erhält als Reaktion darauf ein entsprechendes Datenpaket zurück übermittelt. Die erfolgte Absendung und erhaltene Rücksendung wird von der jeweiligen Steuereinheit protokolliert und abgespeichert, beispielsweise auf einem Server oder in einer Datenbank. Alternativ kann der vorstehend beschriebene digitale Handschlag auch von den jeweiligen zentralen Steuereinheiten initiiert werden. In einer bevorzugten Ausführungsform wird der digitale Handschlag über das Kommunikationsnetzwerk auch zwischen den Steuereinheiten direkt durchgeführt. Auf diese Weise wird jederzeit festgestellt, ob eine Kommunikation zwischen der zentralen Steuereinheit und den Steuereinheiten der Energiespeicheranlagen möglich ist. Insofern kann eine unterbrochene Kommunikation nicht als nicht erfolgte Aktualisierung der globalen Steueranweisungen mit einem entsprechenden Fortfahren der letzten globalen Steueranweisungen missverstanden werden. Bei unterbrochener Kommunikation könnte eine andere globale Steueranweisung notwendig sein, ohne dass die Steuereinheiten davon unterrichtet werden können.

In einer weiteren Ausführungsform ist die Steuereinheit der Energiespeicheranlage dazu ausgestaltet, im Falle einer unterbrochenen Verbindung zur zentralen Steuereinheit diese Verbindung über ein im Kommunikationsnetz vorhandenes alternatives Sub-Kommunikationsnetz wieder herzustellen. Durch die Redundanz im Kommunikationsnetzwerk ist es möglich, über das alternative Sub-Kommunikationsnetz eine möglicherweise wichtige Aktualisierung der Regel- und Systemaufgaben zu erhalten. Mögliche Sub-Kommunikationsnetze sind beispielsweise funkbasierte, kabelbasierte oder stromgebundene Kommunikationsnetze wie beispielsweise das Mobilfunknetz, das Internet, das normale Telefonnetz oder das Stromnetz, wo eine Datenverbindung über die Stromkabel im Stromnetz hergestellt wird.

In einer Ausführungsform umfasst das Kombinationskraftwerk eine Mehrzahl an Energiespeicheranlagen, die an geographisch unterschiedlichen Positionen angeordnet und an das nicht-lokale Stromnetz angeschlossen sind. Die geographisch unterschiedlichen Positionen erlauben eine Verteilung der Energiespeicheranlagen über größere Gebiete oder Regionen, so dass die zusätzlich in das nicht-lokale Energienetz eingespeiste Energie ortsnahe bei einem eventuell großen Verbraucher erfolgen kann. Im Gegensatz dazu müsste die Energie, die beispielsweise durch ein großes Pumpspeicherwerk bereitgestellt wird, gegebenenfalls über weite Strecken im nicht-lokalen Stromnetz bis zum Verbraucher transportiert werden.

Die Steuereinheit ist dabei dazu vorgesehen, die Steuerung der Energiespeicheranlage für das jeweilige Kombinationskraftwerk auf Basis des übermittelten Kenngrößensignals des Turbinenkraftwerks auszuführen. Dazu besitzt die Überwachungseinheit des Turbinenkraftwerks eine geeignete Messeinheit zur Bestimmung der drehzahlspezifischen Kenngröße für die Turbine.

In einer weiteren Ausführungsform umfasst die Überwachungseinheit mehrere Messeinheiten zur Bestimmung der drehzahlspezifischen Kenngröße der Turbine zur Bereitstellung einer Redundanz bei der Drehzahlbestimmung. Messeinheiten beispielsweise als Drehzahlmesser gibt es in den verschiedensten Ausführungen, beispielsweise mechanisch oder elektrisch. Gängige Messmethoden sind beispielsweise induktive, optische, akustische oder gyrometrische Messmethoden. Der Fachmann ist in der Lage, geeignete Messeinheiten zur Bestimmung der Turbinendrehzahl auszuwählen.

In einer weiteren Ausführungsform ist die Überwachungseinheit des Turbinenkraftwerks über die Datenverbindung ausgestaltet als sichere Datenleitung mit der Steuerungseinheit der Energiespeicheranlage zur sicheren Übermittlung des Kenngrößensignals an die Steuerungseinheit verbunden. Auf diese Weise wird die Betriebssicherheit des Kombinationskraftwerks gegenüber Manipulationen von außerhalb erhöht. Die räumliche Entfernung zwischen Turbinenkraftwerk und Energiespeicheranlage kann stark variieren. In einer Ausführungsform kann die Energiespeicheranlage auf dem Betriebsgelände des Turbinenkraftwerks angeordnet sein. Hier ist eine sichere Datenleitung nicht unbedingt notwendig, da das Kraftwerksgelände auch unabhängig gesichert werden kann. In einer anderen Ausführungsform kann die Energiespeicheranlage in einer beträchtlichen Entfernung außerhalb des Betriebsgeländes des Turbinenkraftwerks angeordnet sein. Hier erhöht eine sichere Datenübertragung die Betriebssicherheit des Kombinationskraftwerks und die Sicherheit gegenüber Netzausfällen.

Die Erfindung betrifft des Weiteren ein Verfahren zum Betreiben eines erfindungsgemäßen Kombinationskraftwerks, wie es durch den angehängten unabhängigen Anspruch 13 definiert ist, wobei das Kombinationskraftwerk mindestens ein Turbinenkraftwerk zur Einspeisung von Strom in ein angeschlossenes nicht-lokales Stromnetz und mindestens eine Energiespeicheranlage, die separat oder über das Turbinenkraftwerk an das nicht-lokale Stromnetz angeschlossen ist, umfasst, unter Anderem mit den Schritten
- Überwachen einer Drehzahl der Turbine anhand einer drehzahlspezifischen Kenngröße mittels mindestens einer Überwachungseinheit zumindest während einer Einspeisung von Energie durch das Turbinenkraftwerk in das nicht-lokale Stromnetz;
- Übermitteln eines Kenngrößensignals basierend auf der drehzahlspezifischen Kenngröße von der Überwachungseinheit an eine Steuereinheit der Energiespeicheranlage über eine Datenverbindung; und
- Einspeisen von Energie in das nicht-lokale Stromnetz durch die Energiespeicheranlage veranlasst durch der Steuereinheit auf Basis des Kenngrößensignals, sofern die Drehzahl der Turbinen absinkt,
sowie allen weiteren Merkmalen des unabhängigen Anspruchs 13.

In einer Ausführungsform umfasst das Verfahren den weiteren Schritt des Aufnehmens und Speicherns von Energie aus dem nicht-lokalen Stromnetz oder eines Teils der durch das Turbinenkraftwerk für das nicht-lokale Stromnetz bereitgestellten Energie durch die Energiespeicheranlage veranlasst durch die Steuereinheit aufgrund eines entsprechenden Turbinendrehzahlsignals, sofern die Drehzahl der Turbine steigt.

In einer weiteren Ausführungsform umfasst das Verfahren den weiteren Schritt des variablen Steuerns der Menge der eingespeisten zusätzlichen Energie und/oder der Menge der aufgenommenen Energie als Funktion der Abweichung der Drehzahl der Turbine von einer Solldrehzahl durch die Steuereinheit.

### Kurze Beschreibung der Abbildungen

Diese und andere Aspekte der Erfindung werden im Detail in den Abbildungen wie folgt gezeigt.
- Fig.1:: ein Ausführungsbeispiel für das erfindungsgemäße Kombinationskraftwerk;
- Fig.2:: ein Ausführungsbeispiel für eine Energiespeicheranlage im erfindungsgemäßen Kombinationskraftwerk;
- Fig.3:: ein Ausführungsbeispiel zur Steuerung der Energiespeicheranlage aufgrund der Drehzahl der Turbine auf Basis der drehzahlspezifischen Kenngröße;
- Fig.4:: ein Ausführungsbeispiel des erfindungsgemäßen Verfahrens;
- Fig.5:: ein Ausführungsbeispiel der Regeleinheit der Energiespeicheranlage.

### Detaillierte Beschreibung der Ausführungsbeispiele

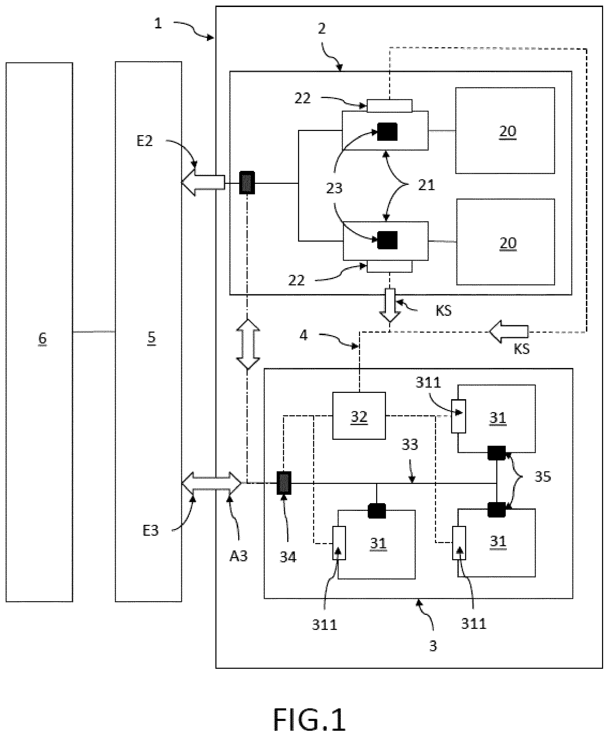

Fig. 1 zeigt ein Kombinationskraftwerk 1 zur Einspeisung von Energie in ein nicht-lokales Stromnetz 5, an das nicht näher bezeichnete Verbraucher (Lasten) 6 angeschlossen sind. Das Kombinationskraftwerk 1 umfasst hier ein Turbinenkraftwerk 2, beispielsweise ein Kohlekraftwerk, und eine Energiespeicheranlage 3 mit drei gleichartigen Energiespeichermodulen 31. Das Turbinenkraftwerk 2 umfasst 2 Kraftwerksblöcke 20 mit jeweils einer Turbine 21 zur Einspeisung E2 von Strom in das angeschlossene nicht-lokale Stromnetz 5. Jede der Turbinen 21 umfasst jeweils eine Messeinheit 23 zur Messung der drehzahlspezifischen Kenngröße, beispielsweise der Drehzahlen der jeweiligen Turbine 21, zumindest während der Energieeinspeisung E2 in das nicht-lokale Stromnetz 5 und jeweils eine an die Messeinheiten angeschlossene Überwachungseinheit 22 zur Überwachung der Turbinendrehzahl anhand der drehzahlspezifischen Kenngröße KD. Die Energiespeicheranlage 3 ist hier einerseits separat an das nicht-lokale Stromnetz 5 und zusätzlich an den Aufschaltpunkt der Kraftwerksturbinen 21 des Turbinenkraftwerks 2 angeschlossen (Punkt-Strich-Line mit Doppelpfeil). In anderen Ausführungsformen können auch mehrere Messeinheiten 23 pro Turbine 21 oder mehrere Überwachungseinheiten 22 pro Turbine 21 angeordnet sein. In einer anderen Ausführungsform kann pro Turbinenkraftwerk 2 lediglich eine gemeinsame Überwachungseinheit 22 für alle Turbinen 21 ausgestattet mit mindestens einer Messeinheit 23 pro Turbine 21 angeordnet sein, die aus der drehzahlspezifischen Kenngröße KD eine durchschnittliche Drehzahl der Turbine berechnet und daraufhin ein entsprechendes Kenngrößensignal KS zur Steuereinheit 32 aussendet. Die beiden Überwachungseinheiten 22 sind mit der Steuereinheit 32 der Energiespeicheranlage 3 zur Übermittlung eines Kenngrößensignals KS an die Steuereinheit 32 über eine Datenverbindung 4 (gestrichelte Linien) verbunden. Hierbei ist die Steuereinheit 32 der Energiespeicheranlage 3 dazu vorgesehen, die Energiespeicheranlage 3 auf Basis des Kenngrößensignals KS zu veranlassen, zusätzliche Energie E3 in das nicht-lokale Stromnetz 5 einzuspeisen, sofern die Drehzahl der Turbinen 21 absinkt (beispielsweise unter einen ersten Schwellwert), oder Energie aus dem nicht-lokalen Stromnetz 5 oder einen Teil der durch das Turbinenkraftwerk 2 für das nicht-lokale Stromnetz 5 bereitgestellten Energie aufzunehmen und zu speichern A3, sofern die Drehzahl der Turbine 21 steigt (beispielsweise über einen zweiten Schwellwert). Die ersten und zweiten Schwellwerte können dabei unterhalb und oberhalb eines Sollwertes für die Turbinendrehzahl liegen. Der Fachmann kann die Differenzen zwischen Sollwert der Turbinendrehzahl oder der drehzahlspezifischen Kenngröße KD und den ersten und zweiten Schwellwerten geeignet wählen. Bei einer kontinuierlichen Steuerung kann die Steuerung der Energieabgabe / Energieaufnahme der Energiespeicheranlage bei jeder Abweichung vom Sollwert SD der Turbinendrehzahl oder der drehzahlspezifischen Kenngröße KD erfolgen. Die hier gezeigte Energiespeicheranlage 3 umfasst drei Energiespeichermodule 31, die innerhalb der Energiespeicheranlage 3 an ein internes Stromnetz 33 angeschlossen sind, wobei das interne Stromnetz 33 über eine entsprechende Regeleinheit 34 mit dem nicht-lokalen Stromnetz 5 und dem Turbinenkraftwerk 2 verbunden ist. Jedes Energiespeichermodul 31 ist dabei über einen eigenen Aufschaltpunkt 35 an das interne Stromnetz 33 der Energiespeicheranlage 3 angeschlossen. Jedes Energiespeichermodul 31 umfasst eine Modulsteuereinheit 311 zur Steuerung des Energiespeichermoduls, wobei die Steuereinheit 32 der Energiespeicheranlage 3 als Mastersteuereinheit 32 für die Modulsteuereinheiten 311 ausgebildet ist. Die hier gezeigte Ausführungsform des Turbinenkraftwerks 2 mit zwei Kraftwerksblöcken 20 ist nur beispielhaft und kann für andere Kraftwerke 2 in Anzahl und Leistung variieren. Ebenso kann die Energiespeicheranlage weniger als drei Energiespeichermodule oder mehr Energiespeichermodule umfassen.

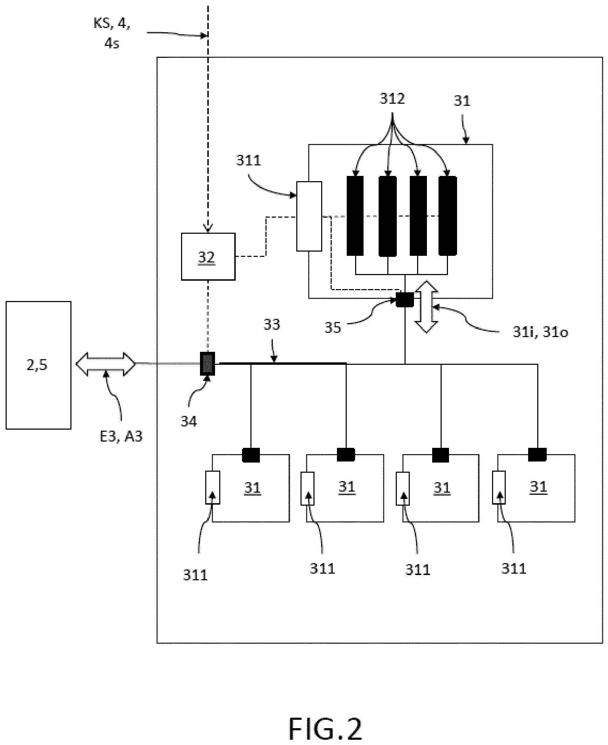

Fig. 2 zeigt ein weiteres Ausführungsbeispiel für eine Energiespeicheranlage 3 im erfindungsgemäßen Kombinationskraftwerk 1, wobei beispielhaft eines der Energiespeichermodule 31 als mechanisches Energiespeichermodul 31 mit vier Schwungradenergiespeichereinheiten 312 ausgebildet ist. In anderen Ausführungsformen kann die Anzahl der Schwungradspeichereinheiten 312 pro Energiespeichermodul 31 anders sein. Diese Anzahl kann auch zwischen unterschiedlichen Energiespeichermodulen 31 variieren. Hier regelt die Modulsteuereinheit 311 die Abgabe 31o beziehungsweise die Aufnahme 31i von Energie an oder aus dem internen Stromnetz 33 aufgrund der Anweisungen durch die Steuereinheit 32 der Energiespeicheranlage 3 als Mastersteuereinheit 32.

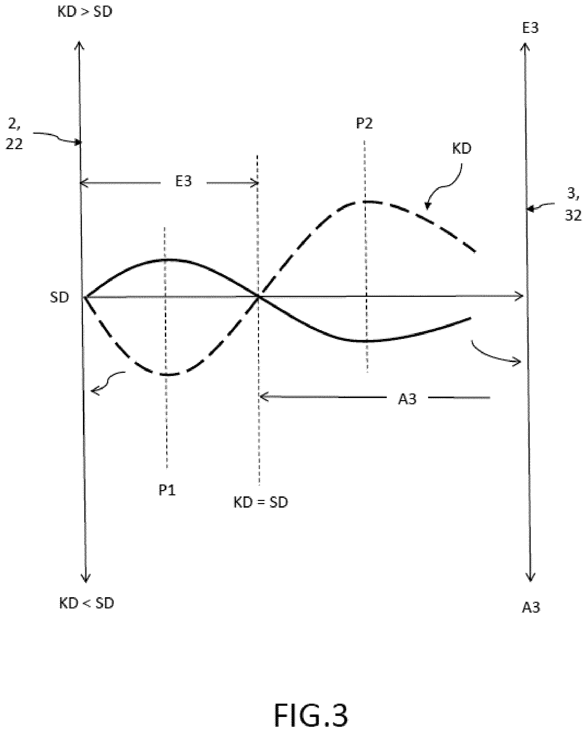

Fig. 3 zeigt ein Ausführungsbeispiel zur Steuerung der Energiespeicheranlage 3 aufgrund der drehzahlspezifischen Kenngröße KD (beispielsweise einer gemessenen Drehzahl) der Turbine. Die sinusförmige gestrichelte Linie KD stellt einen beispielhaften Verlauf der drehzahlspezifischen Kenngröße KD über die Zeit dar. Die Kurvenform ist lediglich anschaulich gewählt und kann im Betrieb auf vielfache Weise von dem hier dargestellten Verlauf abweichen. Die linke vertikale Achse gibt die drehzahlspezifische Kenngröße KD mit einer Solldrehzahl SD als horizontale Linie an. Die drehzahlspezifische Kenngröße KD oberhalb der Solldrehzahl SD entspricht Turbinendrehzahlen größer des Sollwertes SD. Entsprechend entsprechen die drehzahlspezifischen Kenngrößen KD unterhalb des Sollwertes SD Drehzahlen kleiner der Solldrehzahl der Turbine. Die rechte vertikale Achse gibt die eingespeiste Energie (oberhalb der horizontalen Achse) beziehungsweise aufgenommene Energie (unterhalb der horizontalen Achse) für die Energiespeicheranlage 3 an. Die vertikalen gestrichelten Linien bezeichnen besondere Punkte im Verlauf der drehzahlspezifischen Kenngröße KD über die Zeit an. Für die Punkte P1 und P2 ist die drehzahlspezifische Kenngröße KD in dem aufgezeichneten Zeitintervall minimal beziehungsweise maximal (entsprich minimalen und maximalen Drehzahlen der Turbine). Sinkt die drehzahlspezifische Kenngröße unter den Sollwert SD, so wird in diesem Ausführungsbeispiel Energie in das angeschlossene Stromnetz eingespeist, wobei sich die Menge der pro Zeiteinheit eingespeisten Energie (durchgezogene Line) solange erhöht, bis die Abnahme der drehzahlspezifischen Kenngröße KD gestoppt ist. Diese Zunahme kann dabei nur solange erfolgen, solange die angegebene Energie unterhalb der maximalen Leistungsabgabe der Energiespeicheranlage 3 liegt. Ist die maximale Leistungsabgabe erreicht, so würde diese konstant über die Zeit in das Stromnetz 5 eingespeist. Die Einspeisung kann in anderen Ausführungsformen auch gestoppt werden, sobald die Energiespeicheranlage 3 ein bestimmtes Speicherniveau (beispielsweise 10% der maximalen Kapazität) unterschreitet. Parallel zu der Einspeisung durch die Energiespeicheranlage kann das Turbinenkraftwerk bei einer über einen längeren Zeitraum unter dem Sollwert liegenden Turbinendrehzahl hochgefahren werden, so dass das Kraftwerk zu einem späteren Zeitpunkt selbst das Defizit bei der Energielieferung ausgleichen kann. Nachdem die drehzahlspezifische Kenngröße KD nicht mehr sinkt, wird mit konstanter oder wie hier dargestellt, sinkender Energiemenge in das Stromnetz 5 eingespeist. Erreicht die drehzahlspezifische Kenngröße KD den Sollwert SD, so wird idealerweise die Angabe an Energie E3 durch die Energiespeicheranlage 3 gestoppt. Steigt aber die drehzahlspezifische Kenngröße KD weiter an, so wird Energie von der Energiespeicheranlage 3 aufgenommen und gespeichert A3. Die gespeicherte Menge nimmt hier ebenfalls zu, bis die drehzahlspezifische Kenngröße KD nicht mehr steigt. Danach ist die weitere Aufnahme A3 konstant oder fällt wieder (wie hier gezeigt), bis (hier nicht mehr gezeigt) die drehzahlspezifische Kenngröße KD wieder den Sollwert SD erreicht.

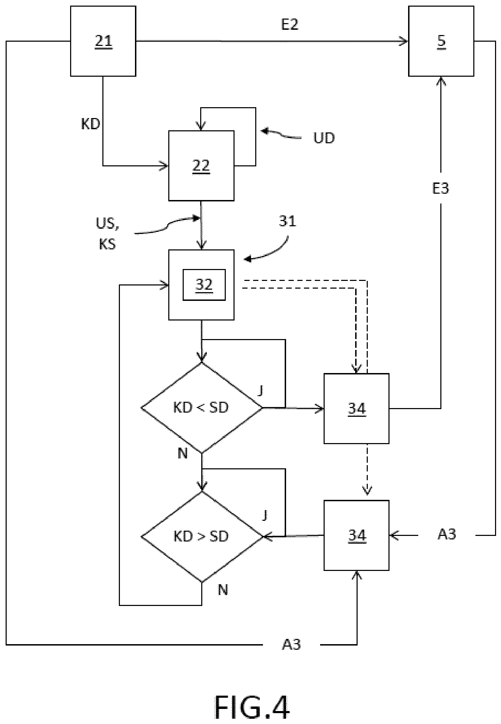

Fig. 4 zeigt ein Ausführungsbeispiel des erfindungsgemäßen Regelungsverfahrens, wobei die Drehzahl der Turbine 21 mittels mindestens einer Überwachungseinheit 22 zumindest während einer Einspeisung E2 von Energie durch das Turbinenkraftwerk 2 in das nicht-lokale Stromnetz 5 anhand einer drehzahlspezifischen Kenngröße KD überwacht wird DU. Die Überwachung DU geschieht kontinuierlich oder periodisch. Dazu wird die drehzahlspezifische Kenngröße KD entsprechend kontinuierlich oder periodisch von der Turbine 21 oder den dafür geeigneten Messstellen (hier nicht gezeigt) der Überwachungseinheit 22 geliefert. Das auf dieser Überwachung DU basierende Kenngrößensignal KS wird von der Überwachungseinheit 22 an die Steuereinheit 32 der Energiespeicheranlage 3 über eine Datenverbindung 4 übermittelt US. Die Steuereinheit regelt nun auf Basis des Kenngrößensignals KS das Einspeisen E3 von Energie in das nicht-lokale Stromnetz 5 über die Regeleinheit 34, sofern die drehzahlspezifische Kenngröße KD der Turbinen 21 absinkt (kleiner als der entsprechende Sollwert SD). Die Einspeisung kann beispielsweise, wie in Figur 3 gezeigt, solange erfolgen, bis die Turbinendrehzahl die Solldrehzahl (Sollwert) erreicht hat. Ist dies nicht der Fall, wird geprüft, ob die drehzahlspezifische Kenngröße KD für die Turbine oberhalb des Sollwertes SD (Solldrehzahl) liegt (= angestiegen). Ist das der Fall, regelt die Steuereinheit 32 das Aufnehmen und Speichern A3 von Energie aus dem nicht-lokalen Stromnetz 5 oder eines Teils der durch das Turbinenkraftwerk 2 für das nicht-lokale Stromnetz 5 bereitgestellten Energie, solange die drehzahlspezifische Kenngröße KD der Turbine 21 oberhalb des Sollwertes SD liegt und damit die Turbinendrehzahl nicht die Solldrehzahl SD erreicht hat. Für die Einspeisung / Aufnahme E3, A3 von Energie steuert die Steuereinheit 32 die Regeleinheit 34 der Energiespeicheranlage 21 entsprechend an (hier als gestrichelte Pfeile dargestellt)

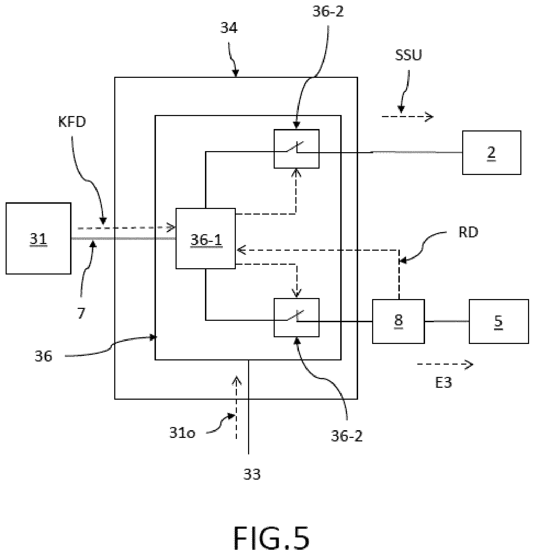

Fig. 5 zeigt ein Ausführungsbeispiel der Regeleinheit 34, die in diesem Ausführungsbeispiel an das Turbinenkraftwerk 2 und an ein nicht-lokales Stromnetz 5 angeschlossen ist. Damit die Regeleinheit 34 den Energiefluss zwischen der Energiespeicheranlage 3 und dem angeschlossenen nicht-lokalen Stromnetz 5 und/oder dem angeschlossenen Turbinenkraftwerk 2 regeln und im Bedarfsfall ein oder mehrere Anschlüsse von der lokalen Energiespeicheranlage 3 trennen kann, umfasst die Regeleinheit 34 in dieser Ausführungsform eine Regelbox 36 mit einem Regelglied 36-1 und separaten Trennschaltern 37-2 für jeden der Anschlüsse an das nicht-lokale Stromnetze 5 beziehungsweise das Turbinenkraftwerk 2. Die Steuereinheit 32 (bei mehreren Energiespeichermodulen als Mastersteuereinheit 32 ausgebildet) ist über eine Datenverbindung 7 mit dem Regelglied 36-1 der Regelbox 36 verbunden und übermittelt der Regelbox 36, hier direkt dem Regelglied 36-1, zur Steuerung der Energieflüsse entsprechende Konfigurationsdaten der Reglerfunktion KFD. Aufgrund der Konfigurationsdaten der Reglerfunktion KFD steuert das Regelglied 36-1 die Verteilung des vom internen Stromnetz 33 eingehenden/ausgehenden Energieflusses EF zu den Trennschaltern 36-2. In diesem Ausführungsbeispiel ist lediglich exemplarisch die Verteilung des Energieflusses bei direkter Einspeisung von Energie E3 in das angeschlossene Stromnetz 5 gezeigt. Die Regelbox 36 ist gleichermaßen dafür ausgestaltet, einen Energiefluss aus dem angeschlossenen Stromnetze 5 und/oder vom Turbinenkraftwerk 2 zu steuern, wobei die Größe der beiden Energieflüsse variiert werden kann. Die Energiespeicheranlage 3 ist hier nicht explizit gezeigt. Die Regelbox 36 kann außerdem von entsprechenden Messeinheiten 8 simultan die relevanten Daten RD aus dem angeschlossenen nicht-lokalen Stromnetzen 5 empfangen, woraus das Regelglied 36-1 das Vorhandensein des angeschlossenen Stromnetzes 5 mittels in dem Regelglied 36-1 hinterlegten Kriterien oder Schwellwerte für die relevanten Daten RD ableitet. Sollte das angeschlossene Stromnetz 5 aufgrund eines Netzausfalls nicht mehr zur Verfügung stehen, so manifestiert sich der Ausfall des Stromnetzes 5 in den entsprechenden, an das Regelglied 36-1 übermittelten relevanten Daten RD, woraufhin das Regelglied 36-1 automatisch entsprechende Trenn-Anweisungen (gestichelter Pfeil) an den betreffenden Trennschalter 36-2 zur Trennung der Energiespeicheranlage 3 von dem angeschlossenen Stromnetzen 5 aussendet, woraufhin der Trennschalter 36-2 das vormals angeschlossene Stromnetze 5 von der Energiespeicheranlage 3 trennt. Die Trennung des angeschlossenen Stromnetzes erfolgt dabei innerhalb weniger Millisekunden. Bei der Trennung vom Stromnetz bleibt die Energiespeicheranlage 1 weiterhin für das Turbinenkraftwerk 2 betriebsbereit. Damit kann bei Ausfall des nicht-lokalen Stromnetzes 5 ein Kurzschluss oder eine Überlastsituation effektiv verhindert werden. Die Regeleinheit 34, insbesondere die Regelbox 36, kann in anderen Ausführungsformen auch an mehr als zwei Stromnetze angeschlossen sein. Die zwei oder mehr angeschlossenen Stromnetze können unter anderem auch lokale Stromnetze sein. Auch nach Trennung vom nicht-lokalen Stromnetz 5 hat die Energiespeicheranlage 3 in der Regel eine nicht unerheblichen Menge an Energie gespeichert, die getrennt vom nicht-lokalen Stromnetz auch zum Turbinenkraftwerk übertragen werden kann. Insofern steht die Energiespeicheranlage mit der in ihr gespeicherten Energie auch für eine Schwarzstartunterstützung SSU des Turbinenkraftwerks nach einem Netzausfall des nicht-lokalen Stromnetzes zur Verfügung.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst, sofern sie in den Wortlaut der angehängten unabhängigen Ansprüche fallen.

### Liste der Bezugszeichen

- 1: erfindungsgemäßes Kombinationskraftwerk
- 2: Turbinenkraftwerk
- 20: Kraftwerksblock im Turbinenkraftwerk
- 21: Turbine des Turbinenkraftwerks
- 22: Überwachungseinheit
- 22a, 22b: mehrere Überwachungseinheiten für eine Turbine
- 23: Messeinheit
- 3: Energiespeicheranlage
- 31: Energiespeichermodul
- 311: Modulsteuerreinheit
- 312: Schwungradenergiespeichereinheiten
- 31i: Aufnahme von Energie aus dem internen Stromnetz durch das Energiespeichermodul
- 31o: Abgabe von Energie an das interne Stromnetz durch das Energiespeichermodul
- 32: Steuereinheit
- 33: internes Stromnetz der Energiespeicheranlage
- 34: Regeleinheit zum Anschluss der Energiespeicheranlage an das nichtlokale Stromnetz und/oder an das Turbinenkraftwerk
- 35: Aufschaltpunkt
- 36: Regelbox als Teil der Regeleinheit
- 36-1: Regelglied
- 36-2: Trennschalter
- 4: Datenverbindung
- 4s: sichere Datenleitung
- 5: nicht-lokales Stromnetz
- 6: Last (Verbraucher) am nicht-lokalen Stromnetz
- 7: Datenverbindung zwischen Regeleinheit und Steuereinheit
- 8: Messeinheit zur Bestimmung von Netzdaten im nicht-lokalen Stromnetz

- A3: Aufnehmen und Speichern von Energie durch die Energiespeicheranlage; Menge der Aufgenommenen Energie
- E2: Stromeinspeisung vom regelfähigen Kraftwerk ins nicht-lokale Stromnetz
- E3: Stromeinspeisung von der Energiespeicheranlage ins nicht-lokale Stromnetz, Menge der eingespeisten Energie
- KFD: Konfigurationsdaten der Reglerfunktion
- P1, P2: Extremwerte im Verlauf der Drehzahl der Turbine als Funktion der Zeit
- SD: Sollwert (Solldrehzahl) für die drehzahlspezifische Kenngröße
- SSU: Schwarzstartunterstützung
- KD: drehzahlspezifische Kenngröße für die Drehzahl der Turbine
- KS: Kenngrößensignal
- UD: Überwachung der Turbinendrehzahl anhand der drehzahlspezifischen Kenngröße
- US: Übermittlung des Kenngrößensignals an die Steuereinheit

## Patentansprüche

1. Ein Kombinationskraftwerk (1) zur Einspeisung von Energie in ein nicht-lokales Stromnetz (5) umfassend mindestens ein Turbinenkraftwerk (2) und mindestens eine Energiespeicheranlage (3) mit ein oder mehreren Energiespeichermodulen (31), wobei das Turbinenkraftwerk (2) zur Einspeisung (E2) von Strom an das nicht-lokale Stromnetz (5) angeschlossen ist und eine Überwachungseinheit (22) umfasst, und wobei die Energiespeicheranlage (3) separat oder über das Turbinenkraftwerk (2) an das nicht-lokale Stromnetz (5) zur Einspeisung von zusätzlicher Energie (E3) in das nicht-lokale Stromnetz (5) angeschlossen ist,
**dadurch gekennzeichnet,**
**dass** die Überwachungseinheit ohne Messungen von Netzparametern im nicht-lokalen Stromnetz eine Drehzahl der Turbine (21) zumindest während der Energieeinspeisung (E2) in das nicht-lokale Stromnetz (5) anhand einer drehzahlspezifischen Kenngröße (KD) ohne Verwendung einer allgemeinen Netzfrequenz des nicht-lokalen Stromnetzes als Regelparameter überwacht (UD), wobei die Überwachungseinheit (22) mit einer Steuereinheit (32) der jeweiligen Energiespeicheranlage (3) zur Übermittlung eines Kenngrößensignals (KS) basierend auf der drehzahlspezifischen Kenngröße (KD) an die Steuereinheit (32) über eine Datenverbindung (4) verbunden ist, und die Steuereinheit (32) der Energiespeicheranlage (3) dazu vorgesehen ist, die Energiespeicheranlage (3) auf Basis des Kenngrößensignals (KS) zu veranlassen, die zusätzliche Energie (E3) in das nicht-lokale Stromnetz (5) mit dem Zweck einzuspeisen, die Sicherheit gegen einen plötzlichen Stromausfall im nicht-lokalen Stromnetz zu erhöhen, sofern die Drehzahl der Turbinen (21) absinkt, ohne dass dafür die Energiespeicheranlage mit einer globalen externen Netzsteuerung oder einer Netzagentur verbunden sein muss.

2. Das Kombinationskraftwerk (1) nach Anspruch 1,
**dadurch gekennzeichnet,**
**dass** die Steuereinheit (32) ferner dazu vorgesehen ist, die Energiespeicheranlage (3) aufgrund eines entsprechenden Kenngrößensignals (KS) dazu zu veranlassen, Energie aus dem nicht-lokalen Stromnetz (5) oder einen Teil der durch das Turbinenkraftwerk (2) für das nicht-lokale Stromnetz (5) bereitgestellten Energie aufzunehmen und zu speichern (A3), sofern die Drehzahl der Turbine (21) steigt.

3. Das Kombinationskraftwerk (1) nach Anspruch 2,
**dadurch gekennzeichnet,**
**dass** Einspeisen an zusätzlicher Energie (E3) erst erfolgt, wenn die Drehzahl der Turbine (21) unter einen ersten Schwellwert absinkt und/oder das Aufzunehmen und Speichern (A3) von Energie erst erfolgt, wenn die Drehzahl der Turbine (21) über einen zweiten Schwellwert steigt.

4. Das Kombinationskraftwerk (1) nach einem der Ansprüche 2 oder 3,
**dadurch gekennzeichnet,**
**dass** die Steuereinheit (32) die Menge der eingespeisten zusätzlichen Energie (E3) und/oder die Menge der aufgenommenen Energie (A3) als Funktion der Abweichung der Drehzahl der Turbine von einer Solldrehzahl (SD) variabel steuert.

5. Das Kombinationskraftwerk (1) nach einem der voranstehenden Ansprüche, **dadurch gekennzeichnet,**
**dass** das Turbinenkraftwerk (2) bei mehreren Turbinen (21) pro Turbine (21) mindestens eine Überwachungseinheit (22) zur Überwachung der Drehzahl der Turbine (21) umfasst, vorzugsweise sind mehrere Überwachungseinheiten (22a, 22b) pro Turbine (21) zur Bereitstellung einer Redundanz bei der Drehzahlüberwachung angeordnet.

6. Das Kombinationskraftwerk (1) nach einem der voranstehenden Ansprüche, **dadurch gekennzeichnet,**
**dass** die Überwachungseinheit (22) mehrere Messeinheiten (23) zur Bestimmung der drehzahlspezifischen Kenngröße (KD) zur Bereitstellung einer Redundanz bei der Bestimmung der drehzahlspezifischen Kenngröße (KD) umfasst.

7. Das Kombinationskraftwerk (1) nach einem der voranstehenden Ansprüche, **dadurch gekennzeichnet,**
**dass** die Energiespeicheranlage (3) modular aufgebaut ist, so dass bei Bedarf zusätzliche Energiespeichermodule (31) zur Energiespeicheranlage (3) hinzugefügt werden können.

8. Das Kombinationskraftwerk (1) nach Anspruch 7,
**dadurch gekennzeichnet,**
**dass** die Energiespeichermodule (31) der Energiespeicheranlage (3) innerhalb der Energiespeicheranlage (3) an ein internes Stromnetz (33) der Energiespeicheranlage (3) angeschlossen sind, und das interne Stromnetz (33) über eine entsprechende Regeleinheit (34) mit dem nicht-lokalen Stromnetz (5) oder dem Turbinenkraftwerk (2) verbunden ist.

9. Das Kombinationskraftwerk (1) nach Anspruch 8,
**dadurch gekennzeichnet,**
**dass** jedes Energiespeichermodul (31) einen eigenen Aufschaltpunkt (35) zu dem internen Stromnetz (33) der Energiespeicheranlage (3) besitzt.

10. Das Kombinationskraftwerk (1) nach einem der Ansprüche 8 oder 9,
**dadurch gekennzeichnet,**
**dass** bei mehreren Energiespeichermodulen (31) in der Energiespeicheranlage (3) jedes Energiespeichermodul (31) eine Modulsteuereinheit (311) zur Steuerung einer Abgabe (31o) oder Aufnahme (31i) von Energie an oder aus dem internen Stromnetz (33) umfasst und die Steuereinheit (32) der Energiespeicheranlage (3) als Mastersteuereinheit (32) für die Modulsteuereinheiten (311) ausgebildet ist.

11. Das Kombinationskraftwerk (1) nach einem der voranstehenden Ansprüche, **dadurch gekennzeichnet,**
**dass** das Energiespeichermodul (31) als mechanisches Energiespeichermodul (31) mit ein oder mehreren Schwungradenergiespeichereinheiten (312) ausgebildet ist.

12. Das Kombinationskraftwerk (1) nach einem der voranstehenden Ansprüche, **dadurch gekennzeichnet,**
**dass** die Überwachungseinheit (22) des Turbinenkraftwerks (2) über die Datenverbindung (4) ausgestaltet als sichere Datenleitung (4s) mit der Steuerungseinheit (32) der Energiespeicheranlage (3) zur sicheren Übermittlung des Kenngrößensignals (KS) an die Steuerungseinheit (32) verbunden ist.

13. Ein Verfahren zum Betreiben eines Kombinationskraftwerks (1) nach Anspruch 1, wobei das Kombinationskraftwerk (1) mindestens ein Turbinenkraftwerk (2) zur Einspeisung (E2) von Strom in ein angeschlossenes nicht-lokales Stromnetz (5) und mindestens eine Energiespeicheranlage (3), die separat oder über das Turbinenkraftwerk (2) an das nicht-lokale Stromnetz (5) angeschlossen ist, umfasst, mit den Schritten
- Überwachen (UD) einer Drehzahl der Turbine (21) ohne Messungen von Netzparametern im nicht-lokalen Stromnetz anhand einer drehzahlspezifischen Kenngröße (KD) ohne Verwendung einer allgemeinen Netzfrequenz des nicht-lokalen Stromnetzes als Regelparameter mittels mindestens einer Überwachungseinheit (22) zumindest während einer Einspeisung (E2) von Energie durch das Turbinenkraftwerk (2) in das nicht-lokale Stromnetz (5);
- Übermitteln (US) eines Kenngrößensignals (KS) basierend auf der drehzahlspezifischen Kenngröße von der Überwachungseinheit (22) an eine Steuereinheit (32) der Energiespeicheranlage (3) über eine Datenverbindung (4); und
- Einspeisen (E3) von Energie in das nicht-lokale Stromnetz (5) durch die Energiespeicheranlage (3) veranlasst durch der Steuereinheit (32) auf Basis des Kenngrößensignals (KS), mit dem Zweck, die Sicherheit gegen einen plötzlichen Stromausfall im nicht-lokalen Stromnetz zu erhöhen, sofern die Drehzahl der Turbinen (21) absinkt, ohne dass dafür die Energiespeicheranlage mit einer globalen externen Netzsteuerung oder einer Netzagentur verbunden sein muss.

14. Das Verfahren nach Anspruch 13 umfassend den weiteren Schritt des Aufnehmens und Speicherns (A3) von Energie aus dem nicht-lokalen Stromnetz (5) oder eines Teils der durch das Turbinenkraftwerk (2) für das nicht-lokale Stromnetz (5) bereitgestellten Energie durch die Energiespeicheranlage (3) veranlasst durch die Steuereinheit (32) aufgrund eines entsprechenden Kenngrößensignals (KS), sofern die Drehzahl der Turbine (21) steigt.

15. Das Verfahren nach Anspruch 13 oder 14 umfassend den weiteren Schritt des variablen Steuerns der Menge der eingespeisten zusätzlichen Energie (E3) und/oder der Menge der aufgenommenen Energie (A3) als Funktion der Abweichung der Drehzahl der Turbine (21) von einer Solldrehzahl (SD) durch die Steuereinheit (32).

## Claims

1. A combined power plant (1) for feeding energy into a non-local power network (5), comprising at least one turbine power plant (2) and at least one energy storage installation (3) with one or more energy storage modules (31), whereby the turbine power plant (2) is connected to the non-local power network (5) in order to feed in (E2) power, and comprising a monitoring unit (22), and whereby the energy storage installation (3) is connected to the non-local power network (5) separately or via the turbine power plant (2), in order to feed (E3) additional energy into the non-local power network (5),
**characterized in that**
without involving measurements of network parameters in the non-local power network, the monitoring unit monitors (UD) the rotational speed of the turbine (21), at least while energy is being fed (E2) into the non-local power network (5), on the basis of a speed-specific characteristic quantity (KD) without the use of a general network frequency of the non-local power network as the control parameter, whereby the monitoring unit (22) is connected to a control unit (32) of the appertaining energy storage installation (3) in order to transmit a characteristic quantity signal (KS) based on the speed-specific characteristic quantity (KD) to the control unit (32) via a data connection (4), and the control unit (32) of the energy storage installation (3) is configured in such a way that - in response to the characteristic quantity signal (KS) - it causes the energy storage installation (3) to feed (E3) the additional energy into the non-local power network (5) in order to improve the safety against a sudden power failure in the non-local network, if the rotational speed of the turbines (21) is falling, without the energy storage installation having to be connected to a global external network control or to a network agency for this purpose.

2. The combined power plant (1) according to claim 1,
**characterized in that**
the control unit (32) is also configured in such a way that - in response to an appertaining characteristic quantity signal (KS) - it causes the energy storage installation (3) to receive energy from the non-local power network (5) or to receive some of the energy provided by the turbine power plant (2) for the non-local power network (5) and to store (A3) this energy, if the rotational speed of the turbine (21) is rising.

3. The combined power plant (1) according to claim 2,
**characterized in that**
energy is only additionally fed in (E3) if the rotational speed of the turbine (21) falls below a first threshold value, and/or the receiving and storage (A3) of energy only takes place if the rotational speed of the turbine (21) rises above a second threshold value.

4. The combined power plant (1) according to one of claims 2 or 3,
**characterized in that**
the control unit (32) variably controls the amount of additionally fed-in (E3) energy and/or the amount of received (A3) energy as a function of a deviation of the rotational speed of the turbine from a target rotational speed (SD).

5. The combined power plant (1) according to one of the preceding claims, **characterized in that,**
if there are several turbines (21), the turbine power plant (2) comprises at least one monitoring unit (22) per turbine (21) that serves to monitor the rotational speed of the turbine (21), preferably, there are several monitoring units (22a, 22b) per turbine (21) in order to achieve a redundancy during the monitoring of the rotational speed.

6. The combined power plant (1) according to one of the preceding claims, **characterized in that**
the monitoring unit (22) comprises several measuring units (23) that serve to determine the speed-specific characteristic quantity (KD) in order to achieve a redundancy during the determination of the speed-specific characteristic quantity (KD).

7. The combined power plant (1) according to one of the preceding claims, **characterized in that**
the energy storage installation (3) has a modular structure so that, if necessary, additional energy storage modules (31) can be added to the energy storage installation (3).

8. The combined power plant (1) according to claim 7,
**characterized in that**
the energy storage modules (31) of the energy storage installation (3) are connected inside the energy storage installation (3) to an internal power network (33) of the energy storage installation (3), and the internal power network (33) is connected via an appropriate regulation unit (34) to the non-local power network (5) or to the turbine power plant (2).

9. The combined power plant (1) according to claim 8,
**characterized in that**
each energy storage module (31) has its own connection point (35) to the internal power network (33) of the energy storage installation (3).

10. The combined power plant (1) according to one of claims 8 or 9,
**characterized in that,**
in the case of several energy storage modules (31) in the energy storage installation (3), each energy storage module (31) comprises a module control unit (311) that serves to control the release (31o) of energy into or the receiving (31i) of energy from the internal power network (33), and the control unit (32) of the energy storage installation (3) is configured as a master control unit (32) for the module control units (311).

11. The combined power plant (1) according to one of the preceding claims, **characterized in that**
the energy storage module (31) is configured as a mechanical energy storage module (31) with one or more flywheel energy storage units (312).

12. The combined power plant (1) according to one of the preceding claims, **characterized in that**
the monitoring unit (22) of the turbine power plant (2) is connected to the control unit (32) of the energy storage installation (3) via the data connection (4) configured as a secure data line (4s) for purposes of securely transmitting the characteristic quantity signal (KS) to the control unit (32).

13. A method for operating a combined power plant (1) according to claim 1, whereby the combined power plant (1) comprises at least one turbine power plant (2) for feeding (E2) power into a connected non-local power network (5) and it also comprises at least one energy storage installation (3) that is connected separately or via the turbine power plant (2) to the non-local power network (5), comprising the following steps:
- monitoring (UD) the rotational speed of the turbine (21) without involving measurements of network parameters in the non-local power network, on the basis of a speed-specific characteristic quantity (KD) without the use of a general network frequency of the non-local power network as the control parameter, by means of at least one monitoring unit (22), at least while energy is being fed (E2) into the non-local power network (5) by the turbine power plant (2);
- transmitting (US) a characteristic quantity signal (KS) based on the speed-specific characteristic quantity from the monitoring unit (22) to a control unit (32) of the energy storage installation (3) via a data connection (4); and
- feeding (E3) energy into the non-local power network (5) by means of the energy storage installation (3) as initiated by the control unit (32) in response to the characteristic quantity signal (KS) in order to improve the safety against a sudden power failure in the non-local network, if the rotational speed of the turbines (21) is falling, without the energy storage installation having to be connected to a global external network control or to a network agency for this purpose.

14. The method according to claim 13, comprising the additional step in which the energy storage installation (3) receives and stores (A3) energy from the non-local power network (5) or some of the energy provided by the turbine power plant (2) for the non-local power network (5), as initiated by the control unit (32) in response to characteristic quantity signal (KS) to this effect, if the rotational speed of the turbine (21) is rising.

15. The method according to claim 13 or 14, comprising the additional step in which the control unit (32) variably controls the amount of additionally fed-in (E3) energy and/or of the amount of received (A3) energy as a function of a deviation of the rotational speed of the turbine (21) from a target rotational speed (SD).

## Revendications

1. Centrale combinée (1) destiné à injecter de l'énergie dans un réseau électrique non local (5), comprenant au moins une centrale à turbine (2) et au moins une installation de stockage d'énergie (3) avec un ou plusieurs modules de stockage d'énergie (31), la centrale à turbine (2) étant, aux fins de l'injection (E2) de courant, raccordée au réseau électrique non local (5) et comprenant une unité de surveillance (22), l'installation de stockage d'énergie (3) étant raccordée séparément ou via la centrale à turbine (2) au réseau électrique non local (5) aux fins de l'injection d'énergie supplémentaire (E3) dans le réseau électrique non local (5), **caractérisée en ce que** l'unité de surveillance surveille sans mesures de paramètres de réseau dans le réseau électrique non local un vitesse de rotation de la turbine (21) au moins pendant l'injection d'énergie (E2) dans le réseau électrique non local (5) à l'aide d'une grandeur caractéristique spécifique à la vitesse de rotation (KD) sans utilisation d'une fréquence de réseau générale du réseau électrique non local en tant que paramètre de réglage (UD), l'unité de surveillance (22) étant reliée à une unité de commande (32) de l'installation de stockage d'énergie respective (3) aux fins de la transmission d'un signal de grandeur caractéristique (KS) sur la base de la grandeur caractéristique spécifique à la vitesse de rotation (KD) à l'unité de commande (32) via une liaison de données (4), et l'unité de commande (32) de l'installation de stockage d'énergie (3) étant prévue pour faire en sorte que l'installation de stockage d'énergie (3), sur la base du signal de grandeur caractéristique (KS), injecte l'énergie supplémentaire (E3) dans le réseau électrique non local (5) pour augmenter la sécurité contre une panne de courant subite dans le réseau électrique non local, dans la mesure où la vitesse de rotation des turbines (21) se réduit, sans que l'installation de stockage d'énergie doive, à cet effet, être reliée à une commande de réseau externe globale ou à une agence de réseau.

2. Centrale combinée (1) selon la revendication 1, **caractérisée en ce que** l'unité de commande (32) est en outre prévue pour faire en sorte que l'installation de stockage d'énergie (3), sur la base d'un signal de grandeur caractéristique correspondant (KS), absorbe et accumule (A3) de l'énergie du réseau électrique non local (5) ou une partie de l'énergie fournie par la centrale à turbine (2) pour le réseau électrique non local (5), dans la mesure où la vitesse de rotation de la turbine (21) augmente.

3. Centrale combinée (1) selon la revendication 2, **caractérisée en ce que** de l'énergie supplémentaire n'est injectée (E3) que si la vitesse de rotation de la turbine (21) tombe en dessous d'une première valeur seuil et/ou **en ce que** de l'énergie n'est absorbée et accumulée (A3) que si la vitesse de rotation de la turbine (21) dépasse une deuxième valeur seuil.

4. Centrale combinée (1) selon l'une des revendications 2 ou 3, **caractérisée en ce que** l'unité de commande (32) commande de manière variable la quantité d'énergie supplémentaire injectée (E3) et/ou la quantité d'énergie absorbée (A3) en tant que fonction de la différence entre la vitesse de rotation de la turbine et une vitesse de rotation de consigne (SD).

5. Centrale combinée (1) selon l'une des revendications précédentes, **caractérisée en ce que** la centrale à turbine (2), étant donné plusieurs turbines (21), comprend, pour chaque turbine (21), au moins une unité de surveillance (22) pour surveiller la vitesse de rotation de la turbine (21), plusieurs unités de surveillance (22a, 22b) par turbine (21) étant agencées de préférence pour fournir une redondance lors de la surveillance de la vitesse de rotation.

6. Centrale combinée (1) selon l'une des revendications précédentes, **caractérisée en ce que** l'unité de surveillance (22) comprend plusieurs unités de mesure (23) pour déterminer la grandeur caractéristique spécifique à la vitesse de rotation (KD) pour fournir une redondance lors de la détermination de la grandeur caractéristique spécifique à la vitesse de rotation (KD).

7. Centrale combinée (1) selon l'une des revendications précédentes, **caractérisée en ce que** l'installation de stockage d'énergie (3) présente une architecture modulaire, de sorte qu'il est possible, en cas de besoin, d'ajouter des modules de stockage d'énergie supplémentaires (31) à l'installation de stockage d'énergie (3).

8. Centrale combinée (1) selon la revendication 7, **caractérisée en ce que** les modules de stockage d'énergie (31) de l'installation de stockage d'énergie (3) sont, dans l'installation de stockage d'énergie (3), raccordés à un réseau électrique interne (33) de l'installation de stockage d'énergie (3) et **en ce que** le réseau électrique interne (33) est relié au réseau électrique non local (5) ou à la centrale à turbine (2) via une unité de réglage appropriée (34).

9. Centrale combinée (1) selon la revendication 8, **caractérisée en ce que** chaque module de stockage d'énergie (31) possède un propre point de branchement (35) au réseau électrique interne (33) de l'installation de stockage d'énergie (3).

10. Centrale combinée (1) selon l'une des revendications 8 ou 9, **caractérisée en ce que**, étant donné plusieurs modules de stockage d'énergie (31) dans l'installation de stockage d'énergie (3), chaque module de stockage d'énergie (31) comprend une unité de commande de module (311) pour commander une délivrance (31o) ou une absorption (31i) d'énergie au ou à partir du réseau électrique interne (33) et **en ce que** l'unité de commande (32) der installation de stockage d'énergie (3) est réalisée en tant qu'unité de commande maître (32) pour les unités de commande de module (311).

11. Centrale combinée (1) selon l'une des revendications précédentes, **caractérisée en ce que** le module de stockage d'énergie (31) est réalisé en tant que module de stockage d'énergie mécanique (31) comportant une ou plusieurs unités de stockage d'énergie à volant d'inertie (312).

12. Centrale combinée (1) selon l'une des revendications précédentes, **caractérisée en ce que** l'unité de surveillance (22) de la centrale à turbines (2) est reliée, via la liaison de données (4) sous la forme d'une ligne de données sécurisée (4s), à l'unité de commande (32) de l'installation de stockage d'énergie (3) pour la transmission sécurisée du signal de grandeur caractéristique (KS) à l'unité de commande (32).

13. Procédé d'exploitation d'une centrale combinée (1) selon la revendication 1, la centrale combinée (1) comprenant au moins une centrale à turbine (2) pour injecter (E2) du courant dans un réseau électrique non local raccordé (5) et au moins une installation de stockage d'énergie (3) raccordée séparément ou via la centrale à turbine (2) au réseau électrique non local (5) aux fins de l'injection d'énergie supplémentaire dans le réseau électrique non local (5), comportant les étapes suivantes :
- surveillance (UD) d'une vitesse de rotation de la turbine (21) sans mesures de paramètres de réseau dans le réseau électrique non local à l'aide d'une grandeur caractéristique spécifique à la vitesse de rotation (KD) sans utilisation d'une fréquence de réseau générale du réseau électrique non locales en tant que paramètre de réglage au moyen d'au moins une unité de surveillance (22) au moins pendant une injection (E2) d'énergie par la centrale à turbine (2) dans le réseau électrique non local (5) ;
- transmission (US) d'un signal de grandeur caractéristique (KS) sur la base de la grandeur caractéristique spécifique à la vitesse de rotation de l'unité de surveillance (22) à une unité de commande (32) de l'installation de stockage d'énergie (3) via une liaison de données (4) et
- injection (E3) d'énergie dans le réseau électrique non local (5) par l'installation de stockage d'énergie (3), provoquée par l'unité de commande (32) sur la base du signal de grandeur caractéristique (KS) dans le but d'augmenter la sécurité contre une panne de courant subite dans le réseau électrique non local, dans la mesure où la vitesse de rotation des turbines (21) se réduit, sans que l'installation de stockage d'énergie doive, à cet effet, être reliée à une commande de réseau externe globale ou à une agence de réseau.

14. Procédé selon la revendication 13, comprenant l'étape supplémentaire consistant à absorber et accumuler (A3) de l'énergie du réseau électrique non local (5) ou une partie de l'énergie fournie par la centrale à turbine (2) pour le réseau électrique non local (5), provoquée par l'unité de commande (32) sur la base d'un signal de grandeur caractéristique correspondant (KS), dans la mesure où la vitesse de rotation de la turbine (21) augmente.

15. Procédé selon la revendication 13 ou 14, comprenant l'étape supplémentaire de la commande variable de la quantité d'énergie supplémentaire injectée (E3) et/ou de la quantité de l'énergie absorbée (A3) en tant que fonction de la différence entre la vitesse de rotation de la turbine (21) et une vitesse de rotation de consigne (SD) par l'unité de commande (32).
